# EUROPÄISCHE PATENTANMELDUNG

(11) **EP 4 487 686 A1**
(43) Veröffentlichungstag der Anmeldung: **08.01.2025**
(21) Anmeldenummer: 24183631.1
(22) Anmeldetag: 21.06.2024
(51) Int. Cl.: A21C 9/04

(54) **BESTREUEN VON TEIGLINGEN IN EINEM FÖRDERKANAL**

(30) Priorität: 07.07.2023 DE 102023117985
(71) Anmelder: Fritsch Bakery Technologies GmbH & Co. KG, 97348 Markt Einersheim (DE)
(72) Erfinder: Künzer, Ralf, 66538 Neunkirchen (Saar) (DE)
(74) Vertreter: Grünecker Patent- und Rechtsanwälte PartG mbB

(57) **Zusammenfassung**

Eine Vorrichtung (1) zur Bearbeitung von Teiglingen (7) umfasst eine Fördereinrichtung (3) und eine Bestreueinrichtung (21). Die Fördereinrichtung (3) ist dazu konfiguriert, Teiglinge (7) entlang einer Transportrichtung (9) zu fördern. Die Bestreueinrichtung (21) ist dazu konfiguriert, von der Fördereinrichtung (3) geförderte Teiglinge (7) mit einem Streugut (23) zu bestreuen. Die Fördereinrichtung (3) ist zumindest im Bereich der Bestreueinrichtung (21) in Form eines Förderkanals (25) ausgebildet.

## Beschreibung

Die Erfindung betrifft das Gebiet der Herstellung von Backwaren. Insbesondere betrifft die Erfindung das Bestreuen von Teiglingen mit Streugut.

Aus der DE 10 2018 117 004 A1 und der DE 10 2018 117 007 A1 ist jeweils eine Einrichtung zur Förderung von Teig entlang einer Förderstrecke bekannt, welche ein Teigförderelement umfasst. Das Teigförderelement umfasst einen Teigauflagebereich und zwei sich seitlich entlang des Teigauflagebereichs erstreckende Seitenbereiche. Die Seitenbereiche sind jeweils bewegbar zu dem Teigauflagebereich ausgebildet. Durch eine Schwenkbewegung der Seitenbereiche relativ zu dem Teigauflagebereich kann ein U-artiger Teigformungsbereich gebildet werden.

Es ist aus der Praxis bekannt, Teiglinge von oben mit Streugut zu bestreuen, welches an den Teiglingen haften bleiben soll. Beispielsweise werden brötchenförmige Teiglinge von oben mit Körnern bestreut, beispielsweise mit Sonnenblumenkernen oder Mohnkernen.

Es ist Aufgabe der Erfindung, einen verbesserten Weg zum Aufbringen von Streugut auf Teiglinge bereitzustellen.

Gemäß einem Aspekt der Erfindung wird eine Vorrichtung zur Bearbeitung von Teiglingen bereitgestellt. Die Vorrichtung umfasst eine Fördereinrichtung und eine Bestreueinrichtung. Die Fördereinrichtung ist dazu konfiguriert, Teiglinge entlang einer Transportrichtung zu fördern. Die Bestreueinrichtung ist dazu konfiguriert, von der Fördereinrichtung geförderte Teiglinge mit einem Streugut zu bestreuen. Die Fördereinrichtung ist zumindest im Bereich der Streueinrichtung in Form eines Förderkanals ausgebildet.

Von der Bestreueinrichtung abgegebenes Streugut kann durch die Form des Förderkanals im Bereich der Teiglinge gehalten werden. Der Förderkanal kann einen Ansammlungsbereich für Streugut bilden. Die Ausbildung der Fördereinrichtung in Form eines Förderkanals kann ein Anhäufen von Streugut um die Teiglinge herum begünstigen. Durch ein Anhäufen von Streugut um die Teiglinge herum kann in dem Förderkanal begünstigt werden, dass Streugut auch an Flächen der Teilginge anhaftet, welche durch die Bestreueinrichtung nicht direkt bestreut werden. Ein Anhäufen des Streuguts um die Teiglinge herum in dem Förderkanal kann ein Anhaften des Streuguts an Flächen der Teiglinge begünstigen, an welchen Streugut ansonsten nur schwer haften bleibt, beispielsweise Seitenflächen der Teiglinge oder Flächen, welche gegenüber einer horizontalen Ebene stark geneigt sind.

Eine laterale Richtung oder Querrichtung steht zu der Transportrichtung quer oder senkrecht. Die laterale Richtung oder Querrichtung kann zu einer vertikalen Richtung quer oder senkrecht stehen.

Der Förderkanal kann zu beiden lateralen Seiten und nach unten abgeschlossen sein. Die beiden lateralen Seiten können eine bezüglich der Transportrichtung linke Seite und eine bezüglich der Transportrichtung rechte Seite umfassen. Der Förderkanal kann zu beiden lateralen Seiten und nach unten derart abgeschlossen sein, dass dort kein Streugut aus dem Förderkanal entweichen kann.

Der Förderkanal kann eine durchgängige Fläche aufweisen, welche eine Innenfläche des Förderkanals definiert. Die durchgängige Fläche kann ein Inneres des Förderkanals nach unten und zu beiden lateralen Seiten begrenzen.

Alternativ kann der Förderkanal mehrere separate Flächen aufweisen, welche zusammen eine Innenfläche des Förderkanals bilden. Die mehreren separaten Flächen können zusammen eine Innenfläche des Förderkanals bilden. Die mehreren separaten Flächen können ein Inneres des Förderkanals zu beiden lateralen Seiten und nach unten hin abschließen. Die mehreren separaten Flächen können gegeneinander abgedichtet sein, so dass in aufeinandertreffenden Grenzbereichen der separaten Flächen ein Entweichen von Streugut aus dem Förderkanal unterbunden ist.

Der Förderkanal kann einen Bodenbereich aufweisen, welcher eine Aufnahmefläche für die Teiglinge bildet. Der Bodenbereich kann beispielsweise als flacher Bodenbereich, oder als konkaver Bodenbereich, oder als konvexer Bodenbereich ausgebildet sein. Der Bodenbereich kann bezüglich der Querrichtung zentral in dem Förderkanal ausgebildet sein.

Der Förderkanal kann zwei einander gegenüberliegende Seitenbegrenzungen aufweisen. Die Seitenbegrenzungen können den Förderkanal auf gegenüberliegenden lateralen Seiten begrenzen. Bezüglich einer lateralen Richtung kann der Bodenbereich zwischen den beiden Seitenbegrenzungen vorliegen. Die Seitenbegrenzungen können sich von dem Bodenbereich ausgehend jeweils nach oben hin erstrecken. Die beiden Seitenbegrenzungen können zueinander spiegelbildlich ausgebildet sein.

Der Bodenbereich und die beiden Seitenbegrenzungen können zusammen den Förderkanal bilden. Der Bodenbereich und die beiden Seitenbegrenzungen können einstückig ausgebildet sein. Der Bodenbereich und die beiden Seitenbereiche können als separate Teile ausgebildet sein. Zwischen den separaten Teilen können Abdichtungen vorgesehen sein, welche ein Entweichen von Streugut aus dem Förderkanal in Grenzbereichen zwischen den separaten Teilen erschweren.

Zumindest die Aufnahmefläche kann von einem Fördermittel gebildet sein. Das Fördermittel kann als umlaufendes Fördermittel ausgebildet sein. Das Fördermittel kann sich entlang der Transportrichtung bewegen. Das Fördermittel kann als Förderband ausgebildet sein. Insbesondere kann zumindest die Aufnahmefläche von einem Förderband gebildet werden.

Eine der Seitenbegrenzungen oder beide Seitenbegrenzungen können von einem Fördermittel gebildet werden. Das Fördermittel kann als umlaufendes Fördermittel ausgebildet sein. Das Fördermittel kann als Förderband ausgebildet sein. Insbesondere kann eine der Seitenbegrenzungen oder können beide Seitenbegrenzungen von einem Förderband gebildet werden.

Der Bodenbereich und zumindest eine der Seitenbegrenzungen, insbesondere beide Seitenbegrenzungen, können zusammen von einem Fördermittel gebildet werden. Das Fördermittel kann als umlaufendes Fördermittel und/oder als Förderband ausgebildet sein. Insbesondere können der Bodenbereich und zumindest eine der Seitenbegrenzungen, insbesondere beide Seitenbegrenzungen, zusammen von einem Förderband gebildet werden. Lateral äußere Bereiche des Fördermittels, insbesondere des Förderbands, können gegenüber einem bezüglich der Querrichtung zentralen Bereich des Förderbands nach oben hin aufgestellt sein und so den Förderkanal bilden. Der zentrale Bereich des Förderbands kann den Bodenbereich des Förderkanals bilden. Die aufgestellten Bereiche des Förderbands können die Seitenbegrenzungen des Förderkanals bilden.

Bezüglich der Transportrichtung stromaufwärts des Förderkanals kann das Förderband als flaches Förderband ausgebildet sein. Ein erster flacher Bereich des Förderbands kann entlang der Transportrichtung in einen Bereich des Förderbands übergehen, welcher aufgestellte Seitenbereiche aufweist und so den Förderkanal bildet.

Bezüglich der Transportrichtung stromabwärts des Förderkanals kann das Förderband als flaches Förderband ausgebildet sein. Ein den Förderkanal bildender Bereich des Förderbands, insbesondere ein Bereich des Förderbands mit aufgestellten Seitenbereichen, kann entlang der Transportrichtung in einen zweiten flachen Bereich des Förderbands übergehen.

Eine Breite des Förderkanals kann zumindest 10 cm, oder zumindest 15 cm, oder zumindest 20 cm, oder zumindest 25 cm, oder zumindest 30 cm betragen. Eine Breite des Förderkanals kann 200 cm oder weniger, oder 150 cm oder weniger, oder 100 cm oder weniger, oder 80 cm oder weniger, oder 60 cm oder weniger, oder 50 cm oder weniger, oder 40 cm oder weniger betragen. Die Breite des Förderkanals kann sich auf eine Innenbreite des Förderkanals beziehen, insbesondere im Bereich einer Bodenfläche des Förderkanals.

Eine Breite des der Bodenfläche des Förderkanals oder der Aufnahmefläche für die Teiglinge kann zumindest 10 cm, oder zumindest 15 cm, oder zumindest 20 cm, oder zumindest 25 cm, oder zumindest 30 cm betragen. Eine Breite des der Bodenfläche des Förderkanals oder der Aufnahmefläche für die Teiglinge kann 200 cm oder weniger, oder 150 cm oder weniger, oder 100 cm oder weniger, oder 80 cm oder weniger, oder 60 cm oder weniger, oder 50 cm oder weniger, oder 40 cm oder weniger betragen.

Eine Höhe des Förderkanals kann zumindest 3 cm, oder zumindest 5 cm, oder zumindest 7 cm, oder zumindest 10 cm, oder zumindest 15 cm, oder zumindest 20 cm betragen. Eine Höhe des Förderkanals kann höchstens 50 cm, oder höchstens 40 cm, oder höchstens 30 cm, oder höchstens 20 cm, oder höchstens 15 cm, oder höchstens 10 cm betragen. Die Höhe des Förderkanals kann in einem Inneren des Förderkanals gemessen werden.

Die Seitenbegrenzungen des Förderkanals können nach oben um zumindest 3 cm, oder zumindest 5 cm, oder zumindest 7 cm, oder zumindest 10 cm, oder zumindest 15 cm, oder zumindest 20 cm über den Bodenbereich des Förderkanals hinausragen.

Eine Haupterstreckungsrichtung des Förderkanals kann zu der Transportrichtung parallel sein. Eine Haupterstreckungsrichtung des Förderkanals kann sich entlang der Transportrichtung erstrecken.

Der Förderkanal kann rinnenförmig ausgebildet sein. Der Förderkanal kann in einer zu der Transportrichtung senkrecht stehenden Schnittebene einen zumindest im Wesentlichen U-förmigen Querschnitt aufweisen, oder einen kreissegmentförmigen Querschnitt aufweisen, oder einen rechteckigen Querschnitt aufweisen, oder einen dreieckigen Querschnitt aufweisen, oder einen polygonalen Querschnitt aufweisen.

Der Förderkanal kann zumindest bereichsweise nach oben hin offen sein. Der Förderkanal kann nach oben hin offen sein.

Die Bestreueinrichtung kann dazu konfiguriert sein, Streugut von oben in den Förderkanal abzugeben. Die Bestreueinrichtung kann dazu konfiguriert sein, das Streugut von oben auf in dem Förderkanal geförderte Teiglinge abzugeben, insbesondere abzuwerfen oder fallenzulassen.

Die Bestreueinrichtung kann dazu konfiguriert sein, Streugut mit einer zumindest im Wesentlichen konstanten Abgaberate in den Förderkanal abzugeben, während Teiglinge in dem Förderkanal entlang der Transportrichtung gefördert werden.

Die Vorrichtung kann eine Befeuchtungseinrichtung umfassen. Die Befeuchtungseinrichtung kann dazu konfiguriert sein, eine Flüssigkeit auf die Teiglinge aufzubringen. Die Befeuchtungseinrichtung kann bezüglich der Transportrichtung stromaufwärts der Bestreueinrichtung vorgesehen sein. Die Flüssigkeit kann Wasser umfassen, oder als Wasser ausgebildet sein, oder aus Wasser bestehen. Die Flüssigkeit kann einen Wasseranteil von zumindest 50 Prozent, oder zumindest 70 Prozent, oder zumindest 90 Prozent aufweisen. Ein Aufbringen der Flüssigkeit auf die Teiglinge kann ein Anhaften des Streuguts an die Teiglinge vereinfachen.

Die Befeuchtungseinrichtung kann dazu konfiguriert sein, die Flüssigkeit zumindest auf diejenigen Oberflächenbereiche der Teiglinge aufzubringen, welche einen seitlichen Umfang der Teiglinge bilden, wenn die Teiglinge in dem Förderkanal gefördert werden,. Die Befeuchtungseinrichtung kann dazu konfiguriert sein, die Flüssigkeit zumindest auf diejenigen Oberflächenbereiche der Teiglinge aufzubringen, welche eine Oberseite der Teiglinge bilden, wenn die Teiglinge in dem Förderkanal gefördert werden. Die Befeuchtungseinrichtung kann dazu konfiguriert sein, die Flüssigkeit zumindest auf diejenigen Oberflächenbereiche der Teiglinge, welche einen seitlichen Umfang der Teiglinge bilden, und auf diejenigen Oberflächenbereiche der Teiglinge aufzubringen, welche einen oberen Bereich der Teiglinge bilden, wenn die Teiglinge in dem Förderkanal gefördert werden.

Die Vorrichtung kann eine Aufnahmeeinrichtung umfassen. Die Aufnahmeeinrichtung kann dazu konfiguriert sein, Streugut aus dem Förderkanal aufzunehmen. Die Aufnahmeeinrichtung kann dazu ausgebildet sein, Streugut aufzunehmen, welches die Teiglinge in dem Förderkanal umgeben hat, aber nicht an den Teiglingen haften geblieben ist. Die Aufnahmeeinrichtung kann zumindest teilweise bezüglich der Transportrichtung stromabwärts der Bestreueinrichtung vorgesehen sein. Die Aufnahmeeinrichtung kann zumindest teilweise bezüglich der Transportrichtung stromabwärts des Förderkanals vorgesehen sein.

Die Aufnahmeeinrichtung kann zumindest bereichsweise unter der Fördereinrichtung vorgesehen sein. Streugut kann von der Fördereinrichtung in die Aufnahmeeinrichtung fallen. Die Aufnahmeeinrichtung kann an einem bezüglich der Transportrichtung stromabwärts gelegenen Ende der Fördereinrichtung vorgesehen sein. Die Aufnahmeeinrichtung kann an einem entlang der Transportrichtung gesehen stromabwärts gelegenen Ende des Förderbands vorgesehen sein. An einem Ende der Fördereinrichtung oder an einem Ende des Förderbands kann Streugut von der Fördereinrichtung oder von dem Förderband in die Aufnahmeeinrichtung fallen.

Die Aufnahmeeinrichtung kann unter einem Spalt zwischen der Fördereinrichtung und einem Weiterförderer vorgesehen sein. Der Weiterförderer kann sich entlang der Transportrichtung an die Fördereinrichtung anschließen. Der Weiterförderer kann dazu konfiguriert sein, die Teiglinge von der Fördereinrichtung zu übernehmen und entlang der Transportrichtung weiter zu fördern. Durch den Spalt zwischen der Fördereinrichtung und dem Weiterförderer kann Streugut nach unten in die Aufnahmeeinrichtung fallen.

Die Vorrichtung kann eine Streugutrückführung umfassen. Die Streugutrückführung kann dazu konfiguriert sein, Streugut von der Aufnahmeeinrichtung zu der Bestreueinrichtung zu fördern. Die Streugutrückführung kann dazu konfiguriert sein, das Streugut automatisch von der Aufnahmeeinrichtung zu der Bestreueinrichtung zu fördern. Die Streugutrückführung kann dazu konfiguriert sein, Streugut kontinuierlich von der Aufnahmeeinrichtung zu der Bestreueinrichtung zu fördern. Die Streugutrückführung kann beispielsweise eine Förderschnecke für Streugut umfassen.

Die Vorrichtung kann einen Abstreifer umfassen. Der Abstreifer kann dazu konfiguriert sein, überschüssiges Streugut von den Teiglingen abzunehmen, wenn die Teiglinge unter dem Abstreifer durchgefördert werden. Die Teiglinge können insbesondere von der Fördereinrichtung unter dem Abstreifer durchgefördert werden. Der Abstreifer kann dazu konfiguriert sein, Streugut von den Teiglingen abzunehmen, welches nicht an den Teiglingen haftet. Der Abstreifer kann das überschüssige Streugut durch Kontakt mit dem überschüssigen Streugut von den Teiglingen abnehmen. Durch den Abstreifer kann eine Menge an Streugut reduziert werden, welches bezüglich der Transportrichtung nach dem Abstreifer von den Teiglingen abfällt. Durch den Abstreifer kann eine Beeinträchtigung von dem Abstreifer nachgeordneten Prozessen durch Streugut reduziert werden, welches von den Teiglingen abfällt.

Der Abstreifer kann sich entlang der Querrichtung über der Fördereinrichtung erstrecken. Der Abstreifer kann sich zumindest im Wesentlichen parallel zu der Querrichtung erstrecken. Der Abstreifer kann zumindest im Wesentlichen senkrecht zu der Transportrichtung stehen.

Der Abstreifer kann bezüglich der Transportrichtung stromabwärts der Bestreueinrichtung vorgesehen sein. Der Abstreifer kann bezüglich der Transportrichtung stromaufwärts der Aufnahmeeinrichtung vorgesehen sein. Die Aufnahmeeinrichtung kann dazu konfiguriert sein, von dem Abstreifer abgenommenes Streugut aufzunehmen.

Der Abstreifer kann über dem Förderkanal vorgesehen sein. Von dem Abstreifer abgenommenes Streugut kann um die Teiglinge herum in dem Förderkanal aufgenommen werden. Von dem Abstreifer abgenommenes Streugut kann durch die Fördereinrichtung entlang der Transportrichtung weitergefördert werden, insbesondere bis das Streugut in die Aufnahmeeinrichtung fällt.

Der Abstreifer kann dazu konfiguriert sein, Streugut von den Teiglingen abzunehmen, welches über einer Abnahmehöhe über der Aufnahmefläche für Teiglinge liegt. Die Abnahmehöhe kann verstellbar sein. Durch eine verstellbare Abnahmehöhe kann der Abstreifer auf eine Form und/oder Größer der jeweils zu verarbeitenden Teiglinge einstellbar sein. Der Abstreifer kann höhenverstellbar sein.

Der Abstreifer kann eine Bürste umfassen oder als Bürste ausgebildet sein.

Der Abstreifer kann drehbar sein, insbesondere um eine Abstreifer-Achse drehbar sein. Die Abstreifer-Achse kann sich entlang der Querrichtung erstrecken. Die Abstreifer-Achse kann sich zumindest im Wesentlichen parallel zu der Querrichtung erstrecken. Die Abstreifer-Achse kann zumindest im Wesentlichen senkrecht zu der Transportrichtung stehen.

Der Abstreifer kann drehfest angebracht sein.

Gemäß einem weiteren Aspekt der Erfindung wird ein Verfahren zum Bearbeiten von Teiglingen bereitgestellt. Teiglinge werden entlang einer Transportrichtung mit einer Fördereinrichtung gefördert. Die von der Fördereinrichtung geförderten Teiglinge werden mit einem Streugut bestreut. Die Teiglinge werden in einem Bereich bestreut, in welchem die Fördereinrichtung in Form eines Förderkanals ausgebildet ist.

Das Bestreuen der Teiglinge kann durch eine Bestreueinrichtung erfolgen.

Bei dem Bestreuen kann Streugut in den Förderkanal abgegeben werden. Bei dem Bestreuen kann Streugut von oben in den Förderkanal abgegeben werden. Bei dem Streuen kann Streugut auf die in dem Förderkanal geförderten Teiglinge abgegeben werden.

Das Streugut kann sich in dem Förderkanal um die Teiglinge herum anhäufen. Das Streugut kann sich in dem Förderkanal zumindest bis zu 10 Prozent, oder zumindest bis zu 20 Prozent, oder zumindest bis zu 30 Prozent, oder zumindest bis zu 40 Prozent, oder zumindest bis zu 50 Prozent, oder zumindest bis zu 60 Prozent, oder zumindest bis zu 70 Prozent, oder zumindest bis zu 80 Prozent, oder zumindest bis zu 90 Prozent, oder zumindest bis zu 100 Prozent einer Höhe der Teiglinge anhäufen. Ein Anhäufen des Streuguts in dem Förderkanal um die Teiglinge herum kann ein Anhaften des Streuguts an die Teiglinge begünstigen. Insbesondere können Oberflächenbereiche der Teiglinge, welche einen seitlichen Umfang der Teiglinge bilden, zumindest größtenteils in dem Förderkanal von Streugut bedeckt sein.

Vor dem Bestreuen kann eine Flüssigkeit auf die Teiglinge aufgebracht werden, insbesondere durch eine Befeuchtungseinrichtung.

Die Flüssigkeit kann zumindest auf diejenigen Oberflächenbereiche der Teilginge aufgebracht werden, welche einen seitlichen Umfang der Teiglinge bilden, wenn die Teiglinge in dem Förderkanal gefördert werden.

Das Streugut kann in dem Förderkanal an die Teiglinge anhaften. Das Streugut kann in dem Förderkanal insbesondere an nach oben gerichtete Oberflächenbereiche der Teiglinge anhaften. Das Streugut kann in dem Förderkanal insbesondere an Oberflächenbereiche der Teiglinge anhaften, welche einen seitlichen Umfang der Teiglinge bilden.

Die Teiglinge können nach dem Bestreuen unter einem Abstreifer durchgefördert werden. Der Abstreifer kann überschüssiges Streugut von den Teiglingen abnehmen. Der Abstreifer kann Streugut von den Teiglingen abnehmen, welches auf einer nach oben gerichteten Fläche der Teiglinge liegt.

Das Streugut kann Lebensmittelprodukte umfassen. Das Streugut kann Körner umfassen. Das Streugut kann Kerne umfassen. Das Streugut kann Samen umfassen. Das Streugut kann beispielsweise Sonnenblumenkerne oder Mohnsamen umfassen. Das Streugut kann Streusel umfassen. Das Streugut kann zuckerhaltig sein.

Wie beschrieben, wird gemäß einem Aspekt der Erfindung eine Vorrichtung zur Bearbeitung von Teiglingen bereitgestellt. Wie ebenfalls beschrieben, wird gemäß einem weiteren Aspekt der Erfindung ein Verfahren zum Bearbeiten von Teiglingen bereitgestellt. In Bezug auf einen dieser Aspekte beschriebene Merkmale, Vorteile oder Erläuterungen lassen sich auf den jeweils anderen Aspekt übertragen, oder auf diesen anwenden, oder mit diesem kombinieren. Das Verfahren kann anhand der Vorrichtung durchgeführt werden oder anhand der Vorrichtung durchführbar sein. Die Vorrichtung kann zum Durchführen des Verfahrens geeignet, ausgelegt, und/oder konfiguriert sein.

Im Folgenden wird die Erfindung anhand eines Ausführungsbeispiels unter Bezugnahme auf die Figuren weiter erläutert.
Figur 1 zeigt eine schematische Draufsicht auf eine Vorrichtung zur Bearbeitung von Teiglingen gemäß einer Ausführungsform.
Figur 2 eine schematische Schnittansicht im Bereich eines Förderkanals der Vorrichtung, wobei die Schnittebene senkrecht zu der Transportrichtung steht.

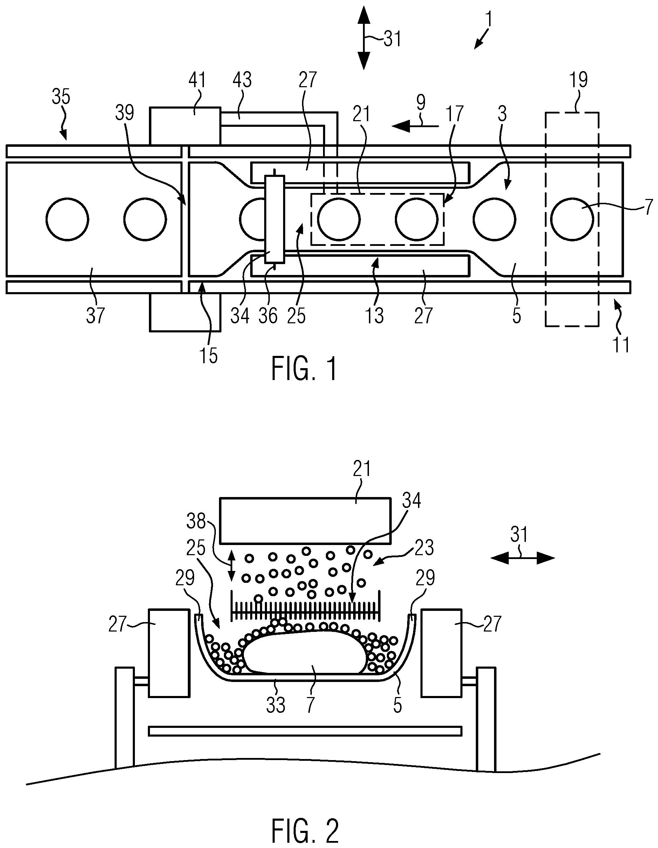

Figur 1 zeigt eine schematische Draufsicht auf eine Vorrichtung 1 gemäß einer Ausführungsform. Die Vorrichtung 1 umfasst eine Fördereinrichtung 3 mit einem Förderband 5. Die Fördereinrichtung 3 fördert Teiglinge 7 entlang einer Transportrichtung 9.

Entlang der Transportrichtung 9 sind ein erster Bereich 11, ein zweiter Bereich 13 und ein dritter Bereich 15 der Fördereinrichtung 3 hintereinander angeordnet.

Die Teiglinge 7 liegen auf einer durch das Förderband 5 gebildeten Aufnahmefläche 17.

In dem ersten Bereich 11 wird von einer Befeuchtungseinrichtung 19 eine Flüssigkeit, insbesondere Wasser, auf die Teiglinge 7 aufgebracht. Dies kann beispielsweise durch Besprühen der Teiglinge 7 erfolgen. Vorzugsweise wird die Flüssigkeit auf nach oben gerichtete Oberflächenbereiche einen seitlichen Umfang der Teiglinge 7 aufgebracht.

In dem zweiten Bereich 13 werden die Teiglinge 7 durch eine Bestreueinrichtung 21 von oben mit Streugut 23 (siehe Figur 2) bestreut. In dem zweiten Bereich 13 ist die Fördereinrichtung 3 in Form eines Förderkanals 25 ausgebildet.

Figur 2 zeigt eine schematische Schnittansicht der Vorrichtung 1 in dem zweiten Bereich 13. Auf gegenüberliegenden lateralen Seiten des Förderbands 5 ist jeweils eine Umlenkeinrichtung 27 vorgesehen. In dem ersten Bereich 11 bildet das Förderband 5 eine flache Fläche. Beim Einlaufen des Förderbands 5 in den zweiten Bereich 13 kommen lateral äußere Bereiche des Förderbands 5 mit den Umlenkeinrichtungen 27 in Kontakt und werden durch die Umlenkeinrichtung 27 nach oben umgelenkt. Lateral äußere Bereiche des Förderbands 5 bilden somit in dem zweiten Bereich 13 gegenüberliegende Seitenbegrenzungen 29. Ein bezüglich der Querrichtung (oder lateralen Richtung) 31 mittlerer Bereich des Förderbands 5 bildet einen Bodenbereich 33. Der Bodenbereich 33 und die Seitenbegrenzungen 29 des Förderbands 5 bilden zusammen den Förderkanal 25.

Das Streugut 23 wird von der Bestreueinrichtung 21 von oben auf die in dem Förderkanal 25 liegenden Teiglinge 7 abgegeben. Eine Abgaberate des Streuguts 23 ist derart gewählt, dass sich das Streugut 23 um die Teiglinge 7 herum in dem Förderkanal 25 anhäuft. Die Seitenbegrenzungen 29 sorgen dafür, dass das Streugut 23 nicht von den Teiglingen 7 wegdriftet und sich stattdessen um die Teiglinge 7 herum anhäuft. Durch das Anhäufen des Streuguts 23 um die Teiglinge 7 herum kann erreicht werden, dass Streugut 23 auch an Oberflächenbereichen der Teiglinge 7 anhaftet, welche einen seitlichen Umfang der Teiglinge 7 bilden.

Der Bestreueinrichtung 21 nachgeordnet erstreckt sich in dem zweiten Bereich 13 ein Abstreifer 34 entlang der Querrichtung 31 über den Förderkanal 25. Der Abstreifer 34 ist in der dargestellten Ausführungsform als eine um eine Abstreifer-Drehachse 36 drehbare Bürste ausgebildet. Der Abstreifer 34 nimmt überschüssiges Streugut 23 von unter dem Abstreifer 34 durchgeförderten Teiglingen 7 ab. Der Abstreifer 34 ist vorzugsweise höhenverstellbar ausgebildet (siehe Doppelpfeil 38 in Fig. 2), um eine Abnahmehöhe an die jeweils verarbeiteten Teiglinge 7 anpassen zu können.

Im dritten Bereich 15 wird das Förderband 5 wieder von den Umlenkeinrichtungen 27 freigegeben und bildet eine flache Fläche.

Bezüglich der Transportrichtung 9 schließt sich ein Weiterförderer 35 an die Fördereinrichtung 3 an. Der Weiterförderer 35 umfasst ein Förderband 37, welches die Teiglinge 7 von dem Förderband 5 übernimmt. Zwischen dem Förderband 5 der Fördereinrichtung 3 und dem Förderband 37 des Weiterförderers 35 liegt ein Spalt 39 vor. Unter dem Spalt 39 ist eine Aufnahmeeinrichtung 41 vorgesehen. Streugut 23, welches nicht an den Teiglingen 7 haften blieb, fällt durch den Spalt 39 in die Aufnahmeeinrichtung 41. Eine Streugutrückführung 43 fördert das Streugut 23 von der Aufnahmeeinrichtung 41 zu der Bestreueinrichtung 21, um eine Wiederverwendung des Streuguts 23 zu ermöglichen.

## Patentansprüche

1. Vorrichtung (1) zur Bearbeitung von Teiglingen (7), umfassend:
eine Fördereinrichtung (3), welche dazu konfiguriert ist, Teiglinge (7) entlang einer Transportrichtung (9) zu fördern; und
eine Bestreueinrichtung (21), welche dazu konfiguriert ist, von der Fördereinrichtung (3) geförderte Teiglinge (7) mit einem Streugut (23) zu bestreuen,
**dadurch gekennzeichnet, dass**
die Fördereinrichtung (3) zumindest im Bereich der Bestreueinrichtung (21) in Form eines Förderkanals (25) ausgebildet ist.

2. Vorrichtung nach Anspruch 1, wobei der Förderkanal (25) zu beiden lateralen Seiten und nach unten abgeschlossen ist.

3. Vorrichtung nach einem der vorangehenden Ansprüche, wobei der Förderkanal (25) einen Bodenbereich (33) aufweist, welcher eine Aufnahmefläche (17) für die Teiglinge (7) bildet, wobei insbesondere zumindest die Aufnahmefläche (17) von einem Förderband (5) gebildet wird.

4. Vorrichtung nach einem der vorangehenden Ansprüche, wobei der Förderkanal (25) zwei einander gegenüberliegende Seitenbegrenzungen (29) aufweist, welche den Förderkanal (25) auf gegenüberliegenden lateralen Seiten begrenzen.

5. Vorrichtung nach Anspruch 4, wobei eine der Seitenbegrenzungen (29) oder beide Seitenbegrenzungen (29) von einem Förderband (5) gebildet werden.

6. Vorrichtung nach Anspruch 1 oder 2, wobei:
der Förderkanal (25) einen Bodenbereich (33) aufweist, welcher eine Aufnahmefläche (17) für die Teiglinge (7) bildet;
der Förderkanal (25) zwei einander gegenüberliegende Seitenbegrenzungen (29) aufweist, welche den Förderkanal (25) auf gegenüberliegenden lateralen Seiten begrenzen; und
der Bodenbereich (33) und zumindest eine der Seitenbegrenzungen (29), insbesondere beide Seitenbegrenzungen (29), zusammen von einem Förderband (5) gebildet werden.

7. Vorrichtung nach einem der vorangehenden Ansprüche, wobei die Vorrichtung (1) zudem eine Befeuchtungseinrichtung (19) umfasst, welche dazu konfiguriert ist, eine Flüssigkeit auf die Teiglinge (7) aufzubringen.

8. Vorrichtung nach einem der vorangehenden Ansprüche, wobei die Vorrichtung (1) zudem einen Abstreifer (34) umfasst, welcher dazu konfiguriert ist, überschüssiges Streugut (23) von den Teiglingen (7) abzunehmen, wenn die Teiglinge (7) unter dem Abstreifer (34) durchgefördert werden, insbesondere in dem Förderkanal (25) unter dem Abstreifer (34) durchgefördert werden.

9. Verfahren zum Bearbeiten von Teiglingen (7), umfassend:
Fördern von Teiglingen (7) entlang einer Transportrichtung (9) mit einer Fördereinrichtung (3); und
Bestreuen der von der Fördereinrichtung (3) geförderten Teiglinge (7) mit einem Streugut (23),
**dadurch gekennzeichnet, dass**
die Teiglinge (7) in einem Bereich bestreut werden, in welchem die Fördereinrichtung (3) in Form eines Förderkanals (25) ausgebildet ist.

10. Verfahren nach Anspruch 9, wobei bei dem Bestreuen Streugut (23) in den Förderkanal (25) abgegeben wird.

11. Verfahren nach Anspruch 9 oder 10, wobei sich das Streugut (23) in dem Förderkanal (25) um die Teiglinge (7) herum aufhäuft, insbesondere zumindest bis zu 10 Prozent, oder zumindest bis zu 20 Prozent, oder zumindest bis zu 30 Prozent, oder zumindest bis zu 40 Prozent, oder zumindest bis zu 50 Prozent, oder zumindest bis zu 60 Prozent, oder zumindest bis zu 70 Prozent, oder zumindest bis zu 80 Prozent, oder zumindest bis zu 90 Prozent, oder zumindest bis zu 100 Prozent einer Höhe der Teiglinge (7).

12. Verfahren nach einem der Ansprüche 9 bis 11, wobei vor dem Bestreuen eine Flüssigkeit auf die Teiglinge (7) aufgebracht wird, wobei die Flüssigkeit insbesondere zumindest auf diejenigen Oberflächenbereiche der Teiglinge (7) aufgebracht wird, welche einen seitlichen Umfang der Teiglinge (7) bilden, wenn die Teiglinge (7) in dem Förderkanal (25) gefördert werden.

13. Verfahren nach einem der Ansprüche 9 bis 12, wobei das Streugut (23) in dem Förderkanal (25) an die Teiglinge (7) anhaftet, insbesondere an nach oben gerichtete Oberflächenbereichen der Teiglinge (7) und an Oberflächenbereiche der Teiglinge (7), welche einem einen seitlichen Umfang der Teiglinge (7) bilden.

14. Verfahren nach einem der Ansprüche 9 bis 13, wobei die Teiglinge (7) nach dem Bestreuen unter einem Abstreifer (34) durchgefördert werden, welcher überschüssiges Streugut (23) von den Teiglingen (7) abnimmt.

15. Verfahren nach einem der Ansprüche 9 bis 14, wobei das Streugut (23) Lebensmittelprodukte umfasst.
